Europäisches Patentamt

European Patent Office

Office européen des brevets

(11) Publication number: **0 358 281**
**A2**

## (12) EUROPEAN PATENT APPLICATION

(21) Application number: 89202742.6

(22) Date of filing: 01.12.88

(51) Int. Cl.5: **A01C 23/02** , **B01D 29/00** , **B01D 33/06**

(30) Priority: 02.12.87 NL 8702901

(43) Date of publication of application:
14.03.90 Bulletin 90/11

(60) Publication number of the earlier application in accordance with Art.76 EPC: 0 322 941

(84) Designated Contracting States:
AT BE CH DE ES FR GB GR IT LI LU NL SE

(71) Applicant: VREDO DODEWAARD B.V.
Welysestraat 25a
NL-6669 DJ Dodewaard(NL)

(72) Inventor: De Vree, Johannes
Welysestraat 25a
NL-6669 DJ Dodewaard(NL)

(74) Representative: Hoijtink, Reinoud et al
OCTROOIBUREAU ARNOLD & SIEDSMA
Sweelinckplein 1
NL-2517 GK Den Haag(NL)

(54) Liquid manure injector.

(57) Device for the injecting of liquid manure into the ground. A very narrow cut is made in the ground of for example grassland by vertically disposed pairs of blades. Directly at the contact point between the blades debouches a nozzle that is connected to a reservoir for liquid manure. Thus achieved is that the liquid manure is introduced directly into the narrow cut in the ground, after which the cut is closed up again by a following furrow closer. This prevents environmentally damaging ammonia escaping from the liquid manure into the surrounding air. To prevent the nozzles to become clogged filter means are provided.

FIG.4

EP 0 358 281 A2

# LIQUID MANURE INJECTOR

The invention relates to a device for introducing liquid manure into the ground, particularly meadowland, comprising means for opening a furrow and a nozzle debouching close to said furrow openers, said nozzle being connected to a supply line connected to a reservoir for liquid manure. Such a device is known from GB-A-1,068,895.

The spreading of manure on arable or meadow land using liquid manure is increasingly the source of environment related problems. When the manure or liquid manure is spread over the land, a large quantity of ammonia is released which is absorbed into the environment via the air. Not only does this cause a not directly discernible deterioration in the environment but it also creates a considerable smell nuisance. It is therefore a problem in urgent need of a solution.

Using the device according to the invention a narrow cut to a depth of for example 5 cm is made in the grassland. This causes no or hardly any damage to the meadowland and also ensures that the liquid manure is immediately carried beneath the surface of the ground. The liquid manure is there absorbed by the surrounding earth so that the quantity of ammonia released into the air is minimal, all the more so since the cut made in the ground is extremely narrow so that contact with the air is greatly limited.

In view of the fact that nozzles of comparatively small diameter are used there is a great danger of blockage by solid portions present in the liquid manure. In order to avoid this according to the invention a filter connected between said reservoir and said supply line is provided, said filter consisting of a cylindrical body and a mesh-form mantle disposed concentrically inside it, a feed line to the outer periphery of said mantle and a discharge line on the inside of said mantle. In this way only thin liquid manure without large solid portions is fed to the distribution system.

It is remarked that manure injectors are known in which a pointed member, which is also the discharge nozzle for the liquid manure, is pulled through the ground. The drawback to this construction is that because the nozzle moves in the ground the outflow opening becomes blocked. Attempts have been made to prevent this occurring by making use of high pressure pumps. The construction according to the present application does not display these drawbacks since a narrow cut is first made in the ground using separate means and liquid manure is then injected into the cut made without the nozzle coming into contact with the ground.

The invention will be further described with reference to a preferred embodiment. In the drawing:

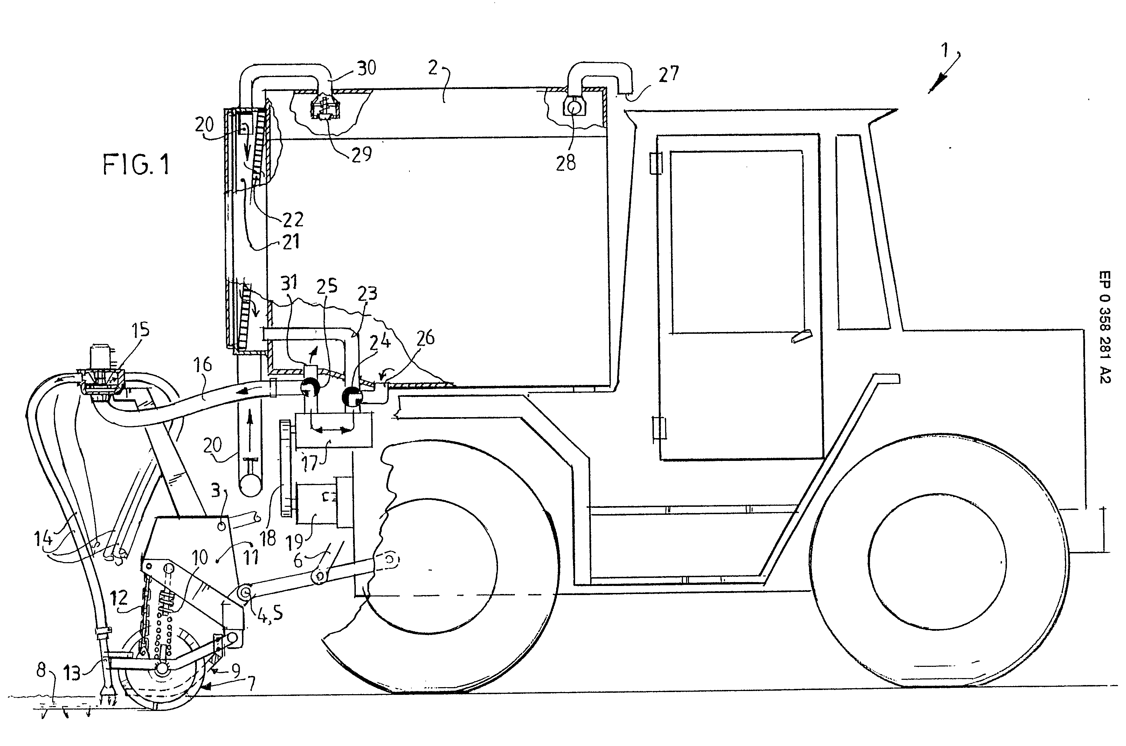

fig. 1 shows a side view of an embodiment of the invention,

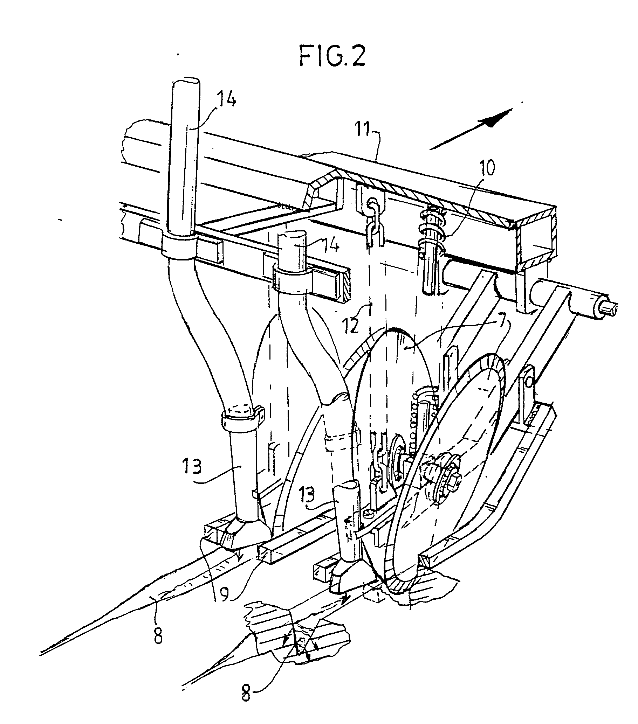

fig. 2 is a rear view of a detail of the cutting-injecting device, and

fig. 3 is a perspective rear view of a part of the device.

Fig. 4 shows an embodiment of a filter,

fig. 5 shows an alternative embodiment of a filter, and

fig. 6 is a side view of a device according to the invention with the filter as in fig. 5.

Mounted onto a tractor 1 is a tank 2 which serves as a reservoir for liquid manure. Arranged at the rear of the tank using a three-point suspension 3, 4, 5 is the cutting-injecting construction. The height of the cutting-injecting device can be controlled with the lever 6. Using pairs of narrow blades 7 in V-shaped disposition a thin cut of approxi mately 5 cm is made in the ground. During cutting of the ground the carriage 9 present by each pair of blades rests on the surface of the ground. The bias of the blade pair is produced by the pressure spring 10. The blade pair is suspended on the frame 11 using the chain 12.

Associated with each pair of blades is a nozzle 13 for the injecting of liquid manure into the cut made. The nozzle 13 is connected with a feed line 14 to a distribution means 15. The distribution means 15 connects the successive nozzles and feed lines 13, 14 at high speed onto the pipe 16 which is connected to the reservoir 2. The liquid manure is fed from reservoir 2 using an impeller pump 17 which is driven via a belt and gearbox transmission 18, 19 by a drive shaft of the tractor (not drawn). The speed of revolution of the impeller pump 17 can be controlled using the gearbox 19.

For filling of the reservoir 2 the connection conduit 20 is placed for example in a liquid manure pit. The pump draws up the liquid manure which enters a space 21 and is pressed through the filter 22 which has a mesh width for instance of 3x3 cm. The filtered liquid manure then enters reservoir 2 via the line 33, the valve 24 and the valve 25. The valve 24 to the feed line 26 is hereby closed, as is the valve 25 to line 16. The air present in reservoir 2 is forced out of reservoir 2 via the bleed channel 27 in which is accommodated a valve 28. When reservoir 2 is filled with liquid manure the valve 28 is pressed shut and the valve 29 in the circulation line 30 is opened. The liquid manure then flows through the line 30 to the filter 22 and keeps on circulating as long as the pump is in operation. The connection between the distribution means 15 and the reservoir 2 can subsequently be effected by closing the valve 24 to the line 23 and opening it to discharge opening 26, and by closing the valve 25 to the opening 31 and opening it to line 16.

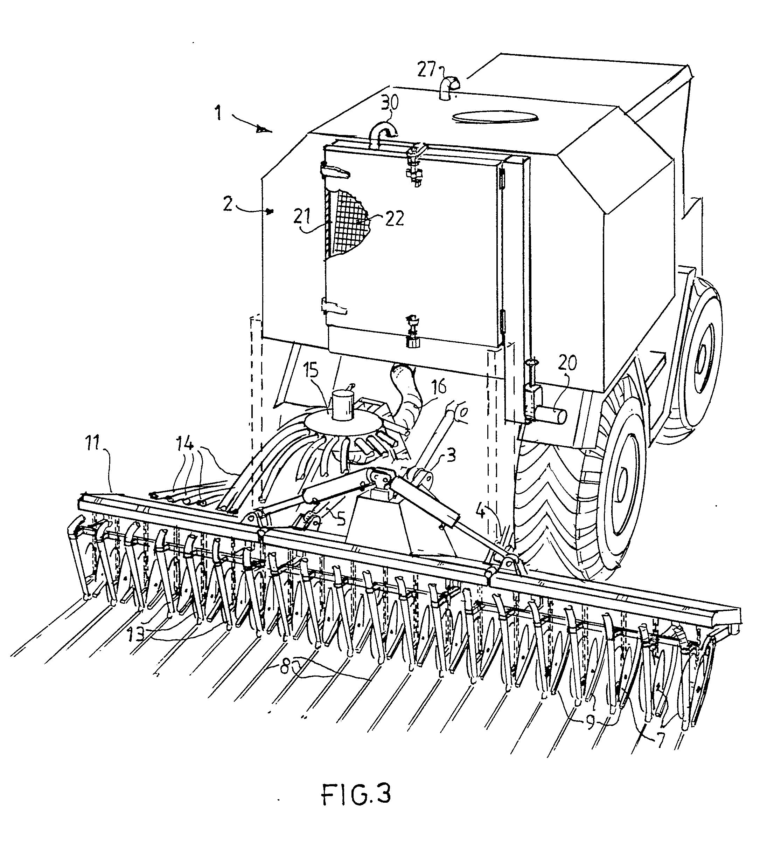

By folding up both end portions of the injection system the width of the whole device is reduced such that transport over public highways is also possible (see fig. 3 with broken lines).

It is further noted that it is of course also possible for the reservoir 2 to be mounted on a separate tank wagon to be pulled by a tractor.

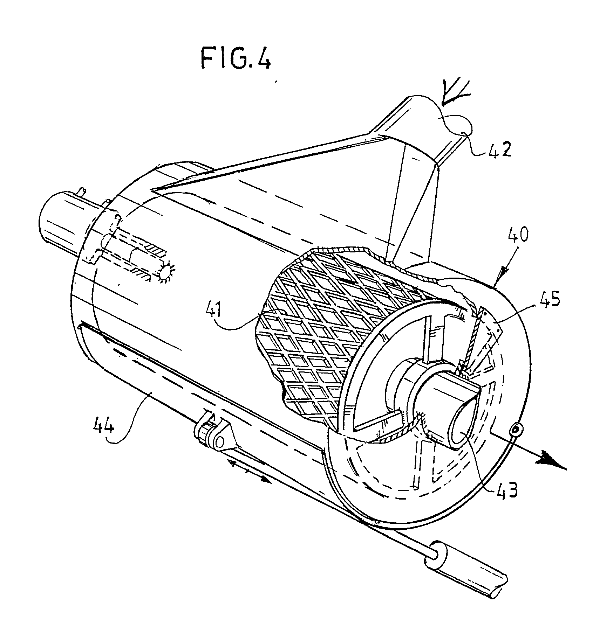

As fig. 4 shows an embodiment of the invention consists of a cylindrical body 40 inside which a mesh-form mantle 41 is rotatable. The liquid manure to be sucked in and pumped into the reservoir 2 is drawn through the inlet branch 42 to the outer periphery of mantle 41 and, with the large pieces strained out, discharged via the shaft outlet pipe 43. For the purpose of removing the large pieces not allowed through the mesh of the mantle 41 the body 40 is provided with a valve 44 which provides access to the outer side of the mesh-form mantle 41. Mantle 41 can be rotated in order to make all parts of the periphery accessible for cleaning thereof. In addition, another door 45 is arranged in order to allow access to the interior of mantle 41.

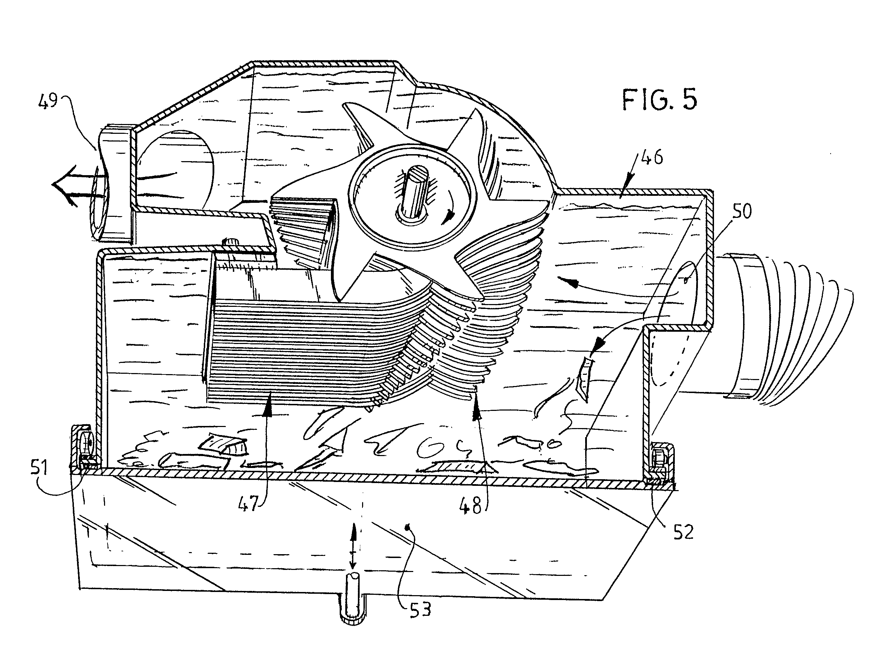

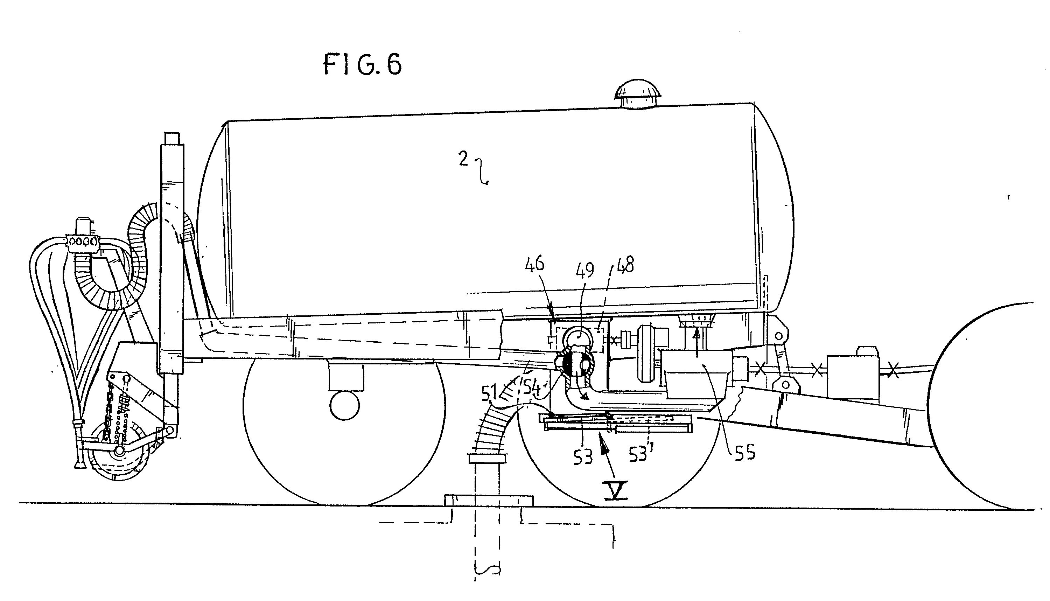

As will be seen in figures 5 and 6 a second embodiment of the filter according to the invention consists of a chamber 46. Present inside the chamber 46 is a slat-form body 47 in a stationary disposition. Further disposed for rotary driving is a body 48 in slat form, which slats rotate between those of the stationary body 47. The body 48 is star-shaped in section. On the chamber the suction side of a pump is connected to the branch 49, while the liquid manure for filtering is fed in via the opening 50. The opening 50 can be connected to a feed line. The branch 49 leads via the pump to the reservoir 2.

Arranged on the underside is a sealed 51, 52 slide plate 53 which after being opened enables removal of the large portions not allowed through the filter body 47, 48. During use the liquid manure is sucked in to the branch 49 and thereby passes through the rotating body 48. This prevents the passage of large chunks and moves them to the bottom. As a result of a cutting action they can be reduced in size during the movement of the slats of the rotary body 48 between the slats of the stationary body 47. Portions that cannot be cut up fall to the bottom of the chamber 46 and can be removed therefrom during cleaning. As can be seen from fig. 6 a ball valve 54 is arranged. The pump 55 is reversible so that when liquid manure is being pumped out of reservoir 2, after reversing of the ball valve 54, this pump can serve to carry liquid manure out of the reservoir to the nozzles close to the blades.

## Claims

1. Device for introducing liquid manure into the ground, particularly meadowland, comprising means for opening a furrow and a nozzle debouching close to said furrow openers, said nozzle being connected to a supply line connected to a reservoir for liquid manure, characterized by a filter connected between said reservoir and said supply line, said filter consisting of a cylindrical body and a mesh-form mantle disposed concentrically inside it, a feed line to the outer periphery of said mantle and a discharge line on the inside of said mantle.

2. Device as claimed in claim 1, characterized in that the filter is formed by a chamber, a slatform body in a stationary position inside said chamber, a rotating body in slat form, which slats rotate between those of said stationary body, a discharge opening on said chamber and a feed opening on said chamber.

3. Device as claimed in claim 2, characterized in that the rotating body is star-shaped in section.

FIG.1

# FIG.2

FIG.3

13635-5A

# FIG.4

13635-5ᴬ

FIG.5

FIG.6